# EUROPÄISCHE PATENTSCHRIFT

(11) **EP 1 557 382 B1**
(45) Veröffentlichungstag und Bekanntmachung des Hinweises auf die Patenterteilung: **12.07.2006**
(21) Anmeldenummer: 04030932.0
(22) Anmeldetag: 29.12.2004
(51) Int. Cl.: B65G 57/28

(54) **Vorrichtung zum Sammeln leerer Paletten**
Empty pallet collecting device
Dispositif pour le prélèvement de palettes vides

(30) Priorität: 22.01.2004 DE 102004003299
(43) Veröffentlichungstag der Anmeldung: 27.07.2005
(73) Patentinhaber: NEDCON MAGAZIJNINRICHTING B.V., 7005 BJ Doetinchem (NL)
(72) Erfinder: de Jong, Leen-Pieter, 7051 GN Varsseveld (NL)
(74) Vertreter: Christophersen & Partner

(56) Entgegenhaltungen:
- EP-A- 1 298 081
- WO-A-03/095342
- US-A- 6 050 771

## Beschreibung

Die Erfindung betrifft eine Vorrichtung zum Sammeln leerer Paletten wie z. B. Euro-Paletten, mit einer aus einem ersten Schenkel und einem hierzu rechtwinkligen zweiten Schenkel zusammengesetzten Palettenaufnahme für den Palettenstapel, dessen Paletten sich mit einer ihrer Schmalseiten an dem ersten Schenkel abstützen, während sich die unterste Palette des Palettenstapels an einer Auflagefläche des zweiten Schenkels abstützt, und mit einer Schwenkeinrichtung zum Verschwenken der Palettenaufnahme zwischen einer Beladestellung, in der der zweite Schenkel unter einer geringen Neigung zur Vertikalen verläuft, und einer Übergabestellung, in der der zweite Schenkel im wesentlichen waagerecht verläuft.

In der Lager- und Kommissioniertechnik wird sehr häufig mit Paletten als Lagerhilfsmittel gearbeitet. Besonders verbreitet sind z. B. die standardisierten Euro-Paletten. Nach Entleerung der Paletten z. B. im Kommissionierbetrieb werden die leeren Paletten zu Palettenstapeln aufgeschichtet und anschließend mit Fördereinrichtungen oder Förderfahrzeugen zu Sammelpunkten befördert.

Das Aufschichten der Paletten zu Palettenstapeln erfolgt fast immer von Hand. Für die Lagerarbeiter ist dies eine schwere körperliche Arbeit, da die Paletten oft ein erhebliches Gewicht aufweisen und es zur Bildung der Palettenstapel erforderlich ist, die einzelne Palette mit ihrem Gewicht zunächst auf die Höhe des bereits gebildeten Stapels anzuheben und sodann dort abzusetzen.

Aus der EP 1 211 198 A1 und der EP 1 298 081 A1 sind Vorrichtungen zum Stapeln leerer Transportpaletten bekannt, die die schwere körperliche Arbeit für die Lagerarbeiter erleichtern. Die Vorrichtungen sind im wesentlichen aus einem ersten Schenkel und einem hierzu rechtwinkligen zweiten Schenkel zusammengesetzt, die zusammen eine verschwenkbare Plattenaufnahme für einen Palettenstapel bilden. Die Paletten des Palettenstapels sind mit ihrer Schmalseite an dem ersten Schenkel abgestützt, während die unterste Palette flach an dem zweiten Schenkel anliegt. Eine Schwenkeinrichtung ermöglicht es, die Palettenaufnahme von einer Belade- in eine Entnahmestellung zu drehen.

Eine solche Palettenaufnahme ist besonders kräfteschonend zu beladen. Hierzu werden gemäß der EP 1 298 081 A1 die einzelnen Paletten zunächst so abgesetzt, daß sie sich mit einem Rand noch auf dem Boden, und mit dem anderen Rand auf dem ersten Schenkel der Palettenaufnahme abstützen. Sodann wird die Palette an ihrem noch auf dem Boden liegenden Rand ergriffen, angehoben und gleichzeitig in einer Schwenkbewegung in die Palettenaufnahme hinein befördert. Bei dieser Bewegung schwenkt die Palette um ihren anderen, sich bereits auf dem ersten Schenkel abstützenden Rand. Infolge dieser Schwenkbewegung muß von den Lagerarbeitern nicht das gesamte Gewicht der jeweiligen Palette angehoben werden, sondern etwa nur die Hälfte des Gewichts. Zudem ist eine zusätzliche Ausrichtung der Palette nicht erforderlich, da sie sich mit ihrem einem Rand bereits auf dem ersten Schenkel der Palettenaufnahme abstützt, und sie insoweit bereits eine eindeutig definierte und zu den anderen Paletten ausgerichtete Lage einnimmt. Zum Ende des Aufladens legt sich die Palette, leicht schräg geneigt, gegen den zweiten Schenkel der Palettenaufnahme oder, wenn sich dort bereits eine Palette befindet, gegen diese erste und damit unterste Palette.

Sobald die Palettenaufnahme mit der Höchstzahl möglicher Paletten beladen ist, wird diese bis in eine Entnahmestellung verschwenkt. Während der zweite Schenkel in der Beladestellung unter einer geringen Neigung zur Vertikalen verläuft, verläuft er in der Entnahmestellung im wesentlichen waagerecht. In Entnahmestellung liegen die Paletten des Palettenstapels daher horizontal geschichtet übereinander und können als Stapel entnommen werden.

Bis zur Entnahme der gestapelten Paletten kommt es oftmals zu Verzögerungen z. B. aufgrund der mangelnden Verfügbarkeit erforderlicher Lagerbediengeräte, so daß der Arbeitsprozeß zu stocken beginnt. Entleerte Paletten stauen sich vor der Vorrichtung, wenn diese zu lange in Entnahmestellung verbleibt. Die bereits gestapelten Paletten wiederum gelangen nicht rechtzeitig zu einem dafür vorgesehenen Sammelpunkt, von welchem aus sie weiteren Arbeitsprozessen zugeführt werden.

Ausgehend von dem eingangs wiedergegebenen Stand der Technik liegt der Erfindung die **Aufgabe** zugrunde, eine verbesserte Vorrichtung anzugeben, welche die genannten Unterbrechungen des Arbeitsprozesses vermeiden hilft.

Die **Lösung** dieser Aufgabe ist gekennzeichnet durch
- eine von der schwenkbaren Palettenaufnahme getrennte Palettenauflage,
- eine Transporteinrichtung zum horizontalen Verfahren der Palettenaufnahme und/oder der Palettenauflage zwischen einer Trennposition, in der Palettenaufnahme und Palettenauflage räumlich getrennt angeordnet sind, und einer Übergabeposition,
- in der Übergabeposition wirksame Mittel zum Absenken der Auflagefläche des zweiten Schenkels relativ zu der Palettenauflage.

Mit einer derartigen Vorrichtung lassen sich Unterbrechungen oder Stockungen des Arbeitsprozesses vermeiden. Dies wird erreicht, indem der Palettenstapel aus der Palettenaufnahme in die Palettenauflage entleert wird, und zunächst auf der Palettenauflage verbleibt. Die schwenkbare Palettenaufnahme steht dann bereits wieder zur Neubefüllung zur Verfügung.

Im Sinne einer konstruktiv möglichst einfachen Lösung wird mit einer Ausgestaltung vorgeschlagen, dass die Palettenauflage, auf welche der Palettenstapel entleert wird, ortsfest angeordnet ist. Hingegen ist die Palettenaufnahme horizontal beweglich gestaltet, und hierzu mittels der Transporteinrichtung zwischen der Übergabeposition und einer Beladeposition verfahrbar.

Die Transporteinrichtung wird vorzugsweise aus Schienen und an einem Gestell, in dem die Palettenaufnahme schwenkbar angeordnet ist, angeordneten Rollen gebildet. Am Sammelpunkt befindet sich die Palettenauflage, welche vorzugsweise eine feste Höhe aufweist, wohingegen die Höhe der Auflagefläche des zweiten Schenkels der schwenkbaren Palettenaufnahme absenkbar und daher in der Höhe beweglich ist.

Eine bevorzugte Ausgestaltung der erfindungsgemäßen Vorrichtung ist gekennzeichnet durch eine Bewegungsrichtung der Mittel zum Absenken der Auflagefläche schräg zur Vertikalen. Der Vorteil dieser Ausgestaltung besteht darin, daß beim Zurückschwenken der Palettenaufnahme von der Übergabestellung in die Beladestellung die Auflagefläche aus ihrer abgesenkten Stellung in ihre angehobene Stellung zurückkehrt, und zwar selbsttätig infolge der Wirkung der Schwerkraft. Ein aktives wieder Anheben des zweiten Schenkels der Palettenaufnahme bzw. der daran ausgebildeten Auflagefläche und damit zusätzliche Handgriffe werden vermieden.

Zur vereinfachten Handhabung der Vorrichtung trägt ferner bei, wenn die Palettenaufnahme und die Palettenauflage mit zusammenwirkenden Auslösemitteln versehen sind, welche das Absenken der Auflagefläche in Bezug auf die Palettenauflage auslösen. Besonders geeignet als Auslösemittel ist auf Seiten der Palettenauflage ein daran fest angebrachter Anschlag. Wenn das Gestell mit der Palettenaufnahme gegen diesen Anschlag stößt, führt der damit einher gehende Stoßimpuls zu einem Absenken der Auflagefläche des zweiten Schenkels der Palettenaufnahme, und damit zu einem Absetzen des Palettenstapels auf der Palettenauflage.

Um zu erreichen, daß die verfahrbare Palettenaufnahme bis in Überdeckung mit der ortsfesten Palettenauflage bewegt werden kann, sollte die Auflagefläche des zweiten Schenkels mit mindestens einer sich vom freien Rand des zweiten Schenkels in Richtung auf den ersten Schenkel erstreckenden Ausnehmung versehen sein. In diese Ausnehmung kann dann eine korrespondierend gestaltete Auflagefläche der ortsfesten Palettenauflage eintreten oder umgekehrt, ohne daß es zu einer gegenseitigen Behinderung oder Kollision der Auflagen kommen kann.

Zum Absenken der Auflagefläche ist diese vorzugsweise über schwenkbare Verbindungsstücke an dem zweiten Schenkel der Palettenaufnahme angelenkt. Die Verbindungsstücke sind um vorzugsweise zentral angeordnete Achsen frei drehbar mit der Palettenaufnahme verbunden, so daß eine Drehung der Verbindungsstücke um diese Drehachsen eine im wesentlichen schräge Absenkung bzw. Anhebung der Auflagefläche in Bezug auf den zweiten Schenkel bewirkt.

Des weiteren wird vorgeschlagen, daß die Verbindungsstücke zu Beginn des Entlagevorgangs einen Winkel mit dem ersten Schenkel der Palettenaufnahme bilden, der durch das Anliegen des Auflageschenkels am ersten Schenkel der Palettenaufnahme begrenzt ist.

Die Palettenaufnahme ist um eine am Gestell angeordnete Achse schwenkbar, die sich sowohl parallel zu dem ersten wie auch zu dem zweiten Schenkel erstreckt. Diese Achse liegt vorzugsweise nahe der Schwerpunktachse der mit einem Palettenstapel vollständig gefüllten Palettenaufnahme.

Nach Verschwenken der Palettenaufnahme kann diese sowohl in Belade- als auch in Übergabestellung arretiert werden.

Weitere Vorteile und Merkmale der Erfindung ergeben sich anhand der folgenden Beschreibung unter Zuhilfenahme der beigefügten Zeichnungen eines erfindungsgemäßen Ausführungsbeispiels. Darin zeigen:
- Fig. 1:: eine schematische Seitenansicht einer in einem fahrbaren Gestell angeordneten Palettenaufnahme;
- Fig. 2:: eine Detailansicht der Mittel zum Absenken der Auflagefläche der Palettenaufnahme in einer schematischen Seitenansicht;
- Fign. 3 bis 7:: schematische Seitenansichten einer erfindungsgemäßen Vorrichtung zu verschiedenen Zeitpunkten eines Ablagevorgangs;
- Fig. 8:: eine schematische Draufsicht auf eine verfahrbare Palettenaufnahme und eine ortsfeste Palettenauflage ohne Paletten.

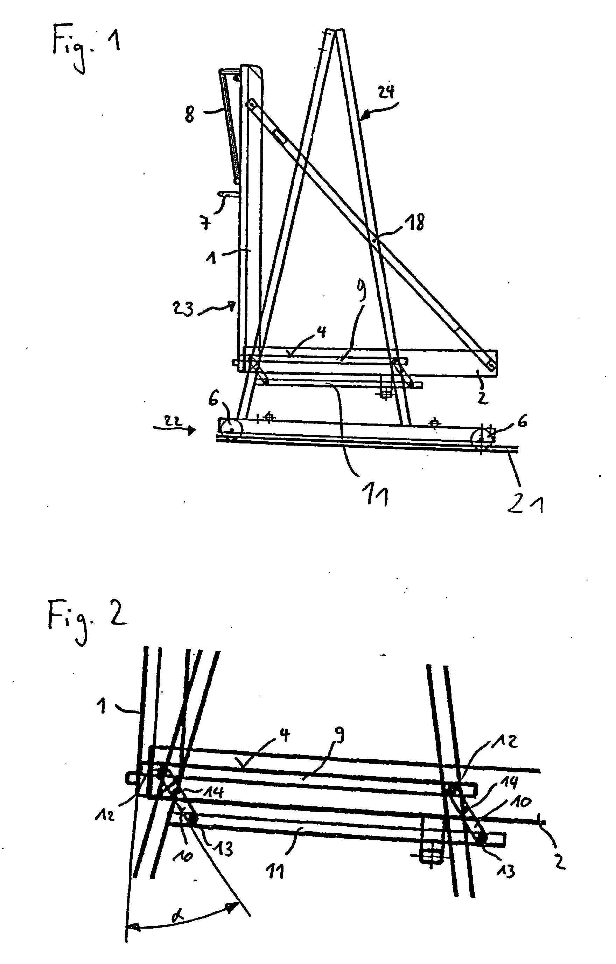

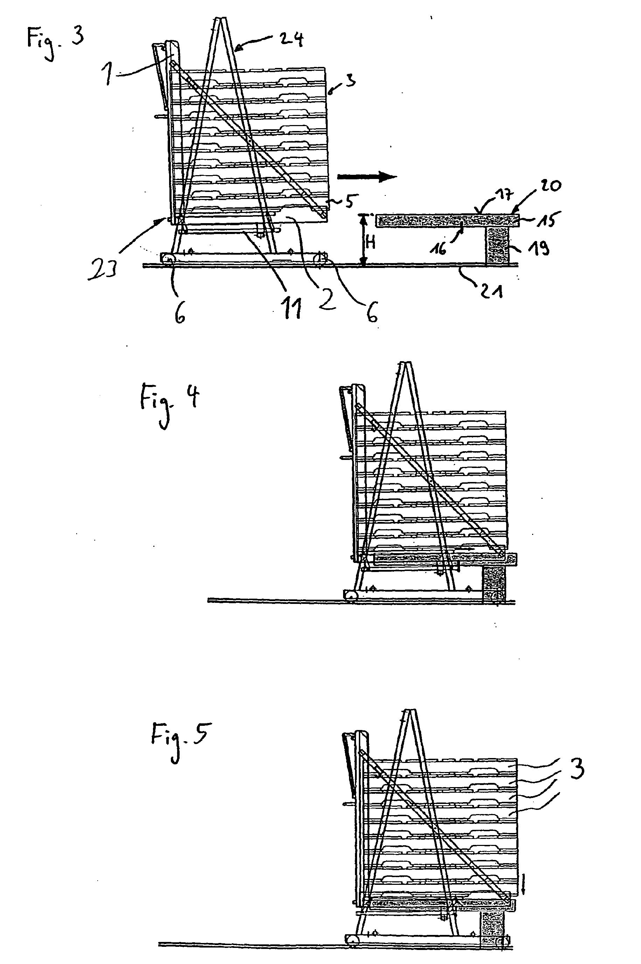

Die Vorrichtung, wie sie in den Fign. 3 bis 8 jeweils in ihrer Gesamtheit dargestellt ist, besteht aus einer in einem horizontal verfahrbaren Gestell 24 angeordneten Palettenaufnahme 23, sowie aus einer räumlich getrennten, ortsfest angeordneten Palettenauflage 20. Zur Erläuterung im Detail ist in den Fign. 1 und 2 jeweils nur die horizontal verfahrbare Palettenaufnahme 23 dargestellt bzw. Teile der Palettenaufnahme. Diese Palettenaufnahme ist in ihren Grundmerkmalen aus der europäischen Patentanmeldung EP 1 298 081 A1 bekannt. In dieser europäischen Patentanmeldung sind auch die wesentlichen Funktionen der Palettenaufnahme beschrieben. Diese lassen sich wie folgt kurz zusammenfassen:

Die insgesamt mit dem Bezugszeichen 23 versehene Palettenaufnahme befindet sich schwenkbar in dem Gestell 24 und setzt sich aus einem ersten Schenkel 1 und einem hierzu rechtwinklig angeordneten zweiten Schenkel 2 zusammen, die gemeinsam eine verschwenkbare Aufnahme für einen Palettenstapel bilden. Mit Paletten sind hier als Lagerhilfsmittel dienende Paletten gemeint, z. B. die sehr verbreiteten, aus Holzbrettern oder Kunststoffteilen zusammengesetzten Euro-Paletten.

Fig. 1 zeigt die Palettenaufnahme 23 in ihrer Übergabestellung. Stellt man sich die Palettenaufnahme hingegen um ca. 90° nach links gedreht vor, würde sich die Palettenaufnahme in ihrer Beladestellung befinden. In der Beladestellung ist der erste Schenkel 1 in etwa horizontal angeordnet, der zweite Schenkel 2 in etwa vertikal. Die Schenkel 1, 2 sind jedoch in dieser Beladestellung nicht exakt horizontal bzw. vertikal, sondern weisen eine leichte Neigung von z. B. 5° zur exakten Horizontalen bzw. Vertikalen auf.

Zum Beladen der Palettenaufnahme mit leeren Paletten wird die einzelne Palette zunächst so abgesetzt, daß sie mit einem Rand noch auf dem Boden, und mit dem anderen Rand auf dem ersten, im wesentlichen horizontal angeordneten Schenkel 1 der Palettenaufnahme 23 liegt. Sodann wird die Palette ausschließlich an ihrem noch auf dem Boden liegenden Rand ergriffen, angehoben und gleichzeitig mit einer Schwenkbewegung in die Palettenaufnahme hinein befördert. Bei dieser Bewegung schwenkt die Palette um ihren anderen, sich bereits auf dem Schenkel 1 abstützenden Rand. Infolge dieser Schwenkbewegung muß von dem Lagerarbeiter nicht das gesamte Gewicht der Palette angehoben werden, sondern nur etwa die Hälfte des Gewichts. Zum Ende des Aufladens legt sich die Palette, leicht schräg geneigt, gegen den zweiten Schenkel 2 der Palettenaufnahme oder, wenn sich dort bereits eine Palette befindet, gegen diese erste und damit unmittelbar an dem Schenkel 2 anliegende Palette. Mit ihrer Schmalseite stützt sich die Palette auf dem ersten Schenkel 1 ab.

Sobald die Palettenaufnahme 23 mit der Höchstzahl möglicher Paletten beladen ist, wird diese um ca. 85° bis in die in Fig. 1 dargestellte Entnahmestellung verschwenkt. In dieser Entnahmestellung ist der erste Schenkel 1 vertikal, und der zweite Schenkel 2 horizontal ausgerichtet. In der Entnahmestellung liegen die Paletten des Palettenstapels daher horizontal geschichtet übereinander, und können als Stapel entnommen werden. Aus Gründen der Übersicht sind die einzelnen Paletten in Fig. 1 nicht eingezeichnet. Jedoch zeigt Fig. 3 die Palettenaufnahme 23 ebenfalls in ihrer Entlade- bzw. Übergabestellung, und zwar einschließlich des darin befindlichen Palettenstapels.

Damit die Palettenaufnahme 23 verschwenkbar ist, befindet sich diese in dem Gestell 24, welches mit einer entsprechenden Schwenkeinrichtung 8 zum Verschwenken der Palettenaufnahme um eine Verschwenkachse 18 versehen ist. Der Verschwenkwinkel zwischen der in Fig. 1 gezeigten Übergabestellung und der nicht dargestellten Beladestellung beträgt ca. 85°.

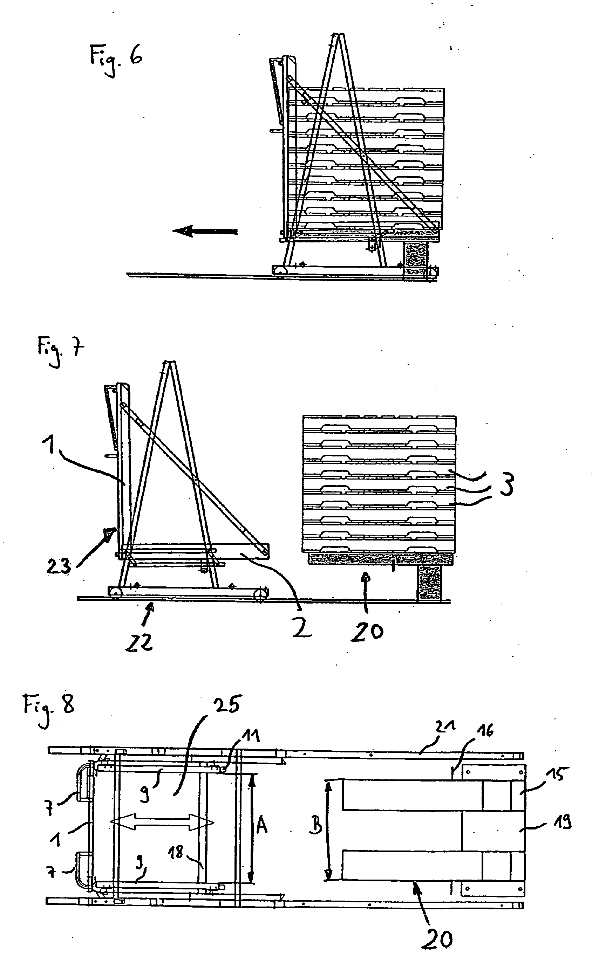

Fig. 3 zeigt die mit den gestapelten Paletten 3 versehene Palettenaufnahme nach wie vor am Ort ihrer Beladung, und damit zugleich räumlich getrennt von der ortsfesten Palettenauflage 20. Letztere ist vorzugsweise nach Art eines Tisches gestaltet, auf dem sich der Palettenstapel absetzten läßt. Um den Palettenstapel zu der ortsfesten Palettenauflage 20 zu befördern, ist das Gestell 24 mit Rollen 6 versehen, und auf einer Schiene 21 horizontal verfahrbar, und zwar bis in Überdeckung mit der ortsfesten Palettenauflage 20. Das horizontale Verfahren erfolgt vorzugsweise durch Handkraft, da die Kombination der Rollen 6 und der Schiene 21 nur geringe Fahrkräfte erfordert. Jedoch kann die gefüllte Palettenaufnahme 23 auch mittels eines Motorantriebes zu der ortsfesten Palettenauflage 20 gefahren werden. Fig. 4 zeigt den Zustand, in welchem die Palettenaufnahme 23 die ortsfeste Palettenauflage 20 erreicht hat. In der Palettenauflage 20 wird der gesamte Palettenstapel abgesetzt, was in Fig. 5 durch einen nach unten weisenden Pfeil symbolisiert ist. Fig. 6 zeigt den nunmehr auf der tischförmigen Palettenauflage 20 aufliegenden Palettenstapel. Die Übergabe des Palettenstapels ist damit abgeschlossen, die fahrbare Palettenaufnahme 23 läßt sich wieder, wie Fig. 7 zeigt, in ihre ursprüngliche Position zurückziehen, wodurch die Palettenaufnahme 23 zur Neubestückung mit leeren Paletten zur Verfügung steht. Die Fig. 8 zeigt in Draufsicht dieselben Gegenstände wie Fig. 7, jedoch aus Gründen der Übersichtlichkeit ohne Darstellung des Palettenstapels.

Zur Übergabe des Palettenstapels von der in dem Gestell 24 angeordneten Palettenaufnahme 23 auf die ortsfeste Palettenauflage 20 ist eine Absenkung des Palettenstapels erforderlich. Bei den dargestellten Ausführungsbeispielen erfolgt diese Absenkung, indem nach Erreichen der Palettenaufnahme 20 jener zweite Schenkel 2 der Palettenaufnahme, auf dem sich die Paletten 3 abstützen, abgesenkt wird. Zu diesem Zweck ist Bestandteil des zweiten Schenkels 2 eine heb- und senkbare Auflagefläche 4, deren Einzelheiten im folgenden anhand der Fign. 1 und 2 erläutert werden. Die Auflagefläche 4, auf welcher sich die unterste Palette 5 (Fig. 3) abstützt, besteht vorzugsweise aus zwei horizontal zueinander beabstandeten Auftageschenketn 9, die über zwei im wesentlichen parallel zueinander verlaufende Verbindungsstücke 10 mit einem Gegenschenkel 11 verbunden sind.

Die Drehachse 14 der Verbindungsstücke 10 befindet sich vorzugsweise im Zentrum der Verbindungsstücke 10 und ist mit der verschwenkbaren Palettenaufnahme 23 drehbar verbunden. In Entnahmestellung bilden die Verbindungsstücke 10 einen Winkel α mit dem ersten Schenkel 1 der Palettenaufnahme 23, der durch die Anlage des Auflageschenkels 9 an dem Schenkel 1 der Palettenaufnahme 23 begrenzt ist. Der Winkel α ist derart dimensioniert, daß das gesamte Parallelogramm unter dem Gewicht der gestapelten Transportpaletten 3 eine stabile Lage einnimmt, d. h. das unerwünschte Drehungen der Verbindungsstücke 10 um die Drehachse 14 während des Verschwenkens um die Achse 18 und des Transportes der gestapelten Paletten 3 auszuschließen sind.

Die Fign. 3 bis 7 zeigen den Transport- und Abladevorgang zu verschiedenen Zeitpunkten. In Fig. 3 ist eine erfindungsgemäße Vorrichtung dargestellt, die mit einem Palettenstapel 3 bestückt ist, dessen untere Palette 5 auf der Auflagefläche 4 anliegt. Der Pfeil deutet dabei die Verfahrrichtung der Vorrichtung in den dafür vorgesehenen Schienen 21 an. Daneben wird eine Palettenauflage 20, auf deren Ablagefläche 17 die gestapelten Paletten 3 abgestellt sind, offenbart. Diese ist im wesentlichen aus dem Auflageblock 19 und mindestens einer Auflagegabel 15, die am Auflageblock 19 befestigt ist und sich in horizontaler Richtung über diesen hinaus erstreckt, zusammengesetzt. An der Auflagegabel 15 sind Anschläge 16, welche sich jeweils in etwa auf Höhe der Gegenschenkel 11 des Parallelogramms der beidseitigen Absenkmechanismen befinden, angebracht.

In Fig. 4 ist zu erkennen, daß die gestapelten Paletten 3 durch horizontales Verfahren der Vorrichtung zunächst über der Palettenauflage 20 positioniert werden. Der Gegenschenkel 11 des Absenkmechanismus bewegt sich dabei gegen den Anschlag 16.

Wird die Vorrichtung nun gemäß Fig. 5 unter erhöhtem Kraftaufwand weiter in Richtung der Palettenauflage 20 verfahren, stößt der Gegenschenkel 11 des Absenkmechanismus gegen den ortsfesten Anschlag 16, und ein rechtsdrehendes Moment um die Drehachse 14 bewirkt eine Änderung der Winkelverhältnisse innerhalb der Parallelogrammgeometrie. Ist der Winkel α auf 0° abgesenkt, so daß das Parallelogramm zu einem Rechteck deformiert ist, reicht ein geringfügiger zusätzlicher Impuls in Richtung der Verfahrrichtung aus, um den Absenkmechanismus in eine Endstellung zu versetzen, in welcher die Paletten 3 auf der Palettenauflage 20 abgestellt sind. In dieser abgesenkten Stellung des Absenkmechanismus befindet sich die Auflagefläche 4 tiefer als die Auflagefläche 17, so daß der Stapel auf der Palettenablage 20 abgesetzt ist. Die Vorrichtung kann gemäß Fig. 6 nahezu kraftfrei zurückgefahren werden, bis der Ablagevorgang in Fig. 7 beendet ist. Die Höhe der Palettenauflage 20 bleibt unverändert, da sie ortsfest ist. Der Stapel ist jetzt zum Abholen bereit. Hierzu kommt vorzugsweise ein separates Entnahmegerät oder ein Regalbediengerät zum Einsatz, welches den auf der Auflagefläche 17 abgesetzten Stapel zunächst untergreift und dann abtransportiert.

Durch das Auslösen der Übergabe der Paletten in der ortsfesten Palettenauflage 20 befindet sich die heb- und senkbare Auflagefläche 4 in ihrer abgesenkten Stellung. Es ist jedoch nicht erforderlich, z. B. von Hand die Auflagefläche 4 wieder anzuheben, um die Palettenaufnahme 23 erneut mit leeren Paletten zu beladen. Vielmehr reicht es aus, die Palettenaufnahme, was ohnehin vorgesehen ist, wieder um 85° in ihre Beladestellung zurückzuschwenken. Hierbei gelangt der zweite Schenkel 2 aus seiner auf der Zeichnung dargestellten horizontalen Ausrichtung in eine nahezu vertikale Ausrichtung. Zugleich klappt, bedingt durch die Wirkung der Schwerkraft, die Auflagefläche 4 zurück in ihre Ausgangsstellung, d. h. in die bezogen auf den zweiten Schenkel 2 angehobene Stellung.

Auch diese vorteilhafte Funktion der automatischen Aufrichtung der Auflagefläche 4 ist auf die beschriebene konstruktive Ausgestaltung zurückzuführen, bei welcher die Auflagefläche 4 an den um die Drehachsen 14 drehbaren Vebindungsstücken 10 angelenkt ist.

Fig. 8 läßt in Draufsicht auf die Vorrichtung erkennen, daß die aus den beiden Auflageschenkeln 9 zusammengesetzte Auflagefläche 4 des zweiten Schenkels 2 mit einer sich vom freien Rand des zweiten Schenkels in Richtung auf den ersten Schenkel 1 erstreckenden Ausnehmung 25 versehen ist. Die Breite A dieser Ausnehmung 25 ist größer, als die Breite B des äußeren Abstandes der Auflageflächen 17 der tischförmigen Palettenauflage 20. Infolge dieser geometrischen Verhältnisse läßt sich die Palettenaufnahme 23 vollständig über die tischförmige Palettenauflage 20 fahren, um dort den Palettenstapel abzusetzen. Eine gegenseitige Behinderung der Auflageflächen 4, 17 findet nicht statt.

### Bezugszeichenliste

- 1: erster Schenkel der Palettenaufnahme
- 2: zweiter Schenkel der Palettenaufnahme
- 3: Paletten
- 4: Auflagefläche der Palettenaufnahme
- 5: unterste Palette
- 6: Rollen
- 7: Handgriff
- 8: Schwenkeinrichtung
- 9: Auflageschenkel
- 10: Verbindungsstück
- 11: Gegenschenkel
- 12: Drehachsen
- 13: Drehachsen
- 14: Drehachsen
- 15: Auflagegabel
- 16: Anschlag
- 17: Auflagefläche der Palettenauflage
- 18: Verschwenkachse
- 19: Anlageblock
- 20: Palettenauflage
- 21: Schiene
- 22: Transporteinrichtung
- 23: Palettenaufnahme
- 24: Gestell
- 25: Ausnehmung

- A: Breite der Ausnehmung
- B: Breite der Palettenauflage
- H: Höhe der Palettenauflage

- α: Winkel

## Patentansprüche

1. Vorrichtung zum Sammeln leerer Paletten wie z. B. Euro-Paletten, mit einer aus einem ersten Schenkel und einem hierzu rechtwinkligen zweiten Schenkeln zusammengesetzten Palettenaufnahme für den Palettenstapel, dessen Paletten sich mit einer ihrer Schmalseiten an dem ersten Schenkel abstützen, während sich die unterste Palette des Palettenstapels an einer Auflagefläche des zweiten Schenkels abstützt, und einer Schwenkeinrichtung zum Verschwenken der Palettenaufnahme zwischen einer Beladestellung in der der zweite Schenkel unter einer geringen Neigung zur Vertikalen verläuft, und einer Übergabestellung, in der der zweite Schenkel im wesentlichen waagerecht verläuft,
**gekennzeichnet durch**
- eine von der schwenkbaren Palettenaufnahme (23) getrennte Palettenauflage (20),
- eine Transporteinrichtung (22) zum horizontalen Verfahren der Palettenaufnahme (23) und/oder der Palettenaufnahme (20) zwischen einer Trennposition, in der Palettenaufnahme (23) und Palettenauflage (20) räumlich getrennt angeordnet sind, und einer Übergabeposition,
- in der Übergabeposition wirksame Mittel zum Absenken der Auflagefläche (4) des zweiten Schenkels (2) relativ zu der Palettenauflage (20).

2. Vorrichtung nach Anspruch 1, **dadurch gekennzeichnet, dass** die Palettenauflage (20) horizontal ortsfest angeordnet ist, wohingegen die Palettenaufnahme (23) mittels der Transporteinrichtung (22) zwischen der Übergabeposition und einer Beladeposition verfahrbar ist.

3. Vorrichtung nach Anspruch 2, **dadurch gekennzeichnet, daß** die Transporteinrichtung (22) aus Schienen (21) und an einem Gestell (24), in dem die Palettenaufnahme (23) schwenkbar angeordnet ist, angeordneten Rollen (6) aufgebaut ist.

4. Vorrichtung nach einem der vorangehenden Ansprüche, **dadurch gekennzeichnet, daß** das Verfahren der Transporteinrichtung (22) manuell erfolgt, und daß hierzu Handgriffe (7) vorgesehen sind.

5. Vorrichtung nach einem der vorangehenden Ansprüche, **dadurch gekennzeichnet, daß** die Palettenauflage (20) eine feste Höhe (H) aufweist, wohingegen die Höhe der Auflagefläche (4) des zweiten Schenkels (2) der Palettenaufnahme (23) absenkbar ist.

6. Vorrichtung nach Anspruch 5, **gekennzeichnet durch** eine Bewegungsrichtung der Mittel zum Absenken der Auflagefläche (4) schräg zur Vertikalen.

7. Vorrichtung nach einem der vorangehenden Ansprüche, **dadurch gekennzeichnet, daß** Palettenaufnahme (23) und Palettenauflage (20) mit zusammenwirkenden Auslösemitteln (11, 16) versehen sind, welche das Absenken der Auflagefläche (4) in Bezug auf die Palettenauflage (20) auslösen.

8. Vorrichtung nach Anspruch 7, **dadurch gekennzeichnet, daß** das Auslösemittel auf Seiten der Palettenauflage (20) ein daran fest angebrachter Anschlag (16) ist.

9. Vorrichtung nach einem der vorangehenden Ansprüche, **dadurch gekennzeichnet, daß** die Auflagefläche (4) des zweiten Schenkels (2) mit mindestens einer sich vom freien Rand des zweiten Schenkels (2) in Richtung auf den ersten Schenkel (1) erstreckenden Ausnehmung (25) versehen ist.

10. Vorrichtung nach Anspruch 9, **dadurch gekennzeichnet, daß** die Ausnehmung eine Breite (A) aufweist, die kleiner als die Breite der Paletten (3) ist.

11. Vorrichtung nach Anspruch 9, **dadurch gekennzeichnet, daß** die Breite (B) der Palettenauflage (20) kleiner ist, als die Breite (A) der Ausnehmung in dem zweiten Schenkel (2).

12. Vorrichtung nach einem der Ansprüche 5 bis 11, **dadurch gekennzeichnet, daß** die Auflagefläche (4) durch ein Paar von zwei Auflageschenkeln (9) gebildet wird, welche in zwei voneinander beabstandeten Drehachsen (12) an jeweils zwei untereinander im wesentlichen parallel verlaufenden Verbindungsstücken (10) drehbar befestigt sind.

13. Vorrichtung nach Anspruch 12, **dadurch gekennzeichnet, daß** die Verbindungsstücke (10) frei drehbar um vorzugsweise zentral angeordnete Achsen (14) mit der Palettenaufnahme (23) verbunden sind, so daß eine Drehung der Verbindungsstücke (10) um diese Drehachsen (14) eine im wesentlichen schräge Absenk- bzw. Anhebebewegung der Auflagefläche (4) bewirkt.

14. Vorrichtung nach Anspruch 13, **dadurch gekennzeichnet, daß** die Verbindungsstücke (10) zu Beginn des Entladevorgangs einen Winkel (α) mit dem ersten Schenkel (1) der Palettenaufnahme (23) bilden, der durch das Anliegen des Auflageschenkels (9) am ersten Schenkel (1) der Palettenaufnahme (23) begrenzt ist.

15. Vorrichtung nach einem der vorangehenden Ansprüche, **dadurch gekennzeichnet, daß** die Palettenaufnahme (23) um eine an einem Gestell (24) angeordnete Achse (18) schwenkbar ist, die sich parallel sowohl zu dem ersten (1) wie auch zu dem zweiten Schenkel (2) erstreckt.

16. Vorrichtung nach Anspruch 15, **dadurch gekennzeichnet, daß** die Achse (18) nahe der Schwerpunktachse der mit einem Palettenstapel (3) vollständig gefüllten Palettenaufnahme (23) angeordnet ist.

17. Vorrichtung nach einem der vorangehenden Ansprüche, **dadurch gekennzeichnet, daß** die Palettenaufnahme (23) in Belade- und in Übergabestellung arretierbar ist.

## Claims

1. Device for collecting empty pallets such as for example Euro pallets, with a pallet receiver, consisting of a first leg and a second leg at right angles thereto, for the pallet stack, the pallets of which are supported with one of their narrow sides against the first leg while the bottom pallet of the pallet stack is supported against a supporting surface of the second leg, and with a pivoting arrangement for pivoting the pallet receiver between a loading position, in which the second leg extends with slight inclination in relation to the vertical, and a transfer position, in which the second leg extends essentially horizontally, **characterized by**
- a pallet support (20) separate from the pivotable pallet receiver (23),
- a transport arrangement (22) for horizontal movement of the pallet receiver (23) and/or the pallet support (20) between a separated position, in which the pallet receiver (23) and pallet support (20) are arranged in a spatially separated manner, and a transfer position,
- means active in the transfer position for lowering the supporting surface (4) of the second leg (2) relative to the pallet support (20).

2. Device according to Claim 1, **characterized in that** the pallet support (20) is arranged in a horizontally stationary manner, whereas the pallet receiver (23) can be moved between the transfer position and a loading position by means of the transport arrangement (22).

3. Device according to Claim 2, **characterized in that** the transport arrangement (22) is composed of rails (21) and rollers (6) arranged on a frame (24) in which the pallet receiver (23) is pivotably arranged.

4. Device according to one of the preceding claims, **characterized in that** the movement of the transport arrangement (22) is effected manually, and **in that** handles (7) are provided for this.

5. Device according to one of the preceding claims, **characterized in that** the pallet support (20) has a fixed height (H), whereas the height of the supporting surface (4) of the second leg (2) of the pallet receiver (23) can be lowered.

6. Device according to Claim 5, **characterized by** a movement direction of the means for lowering the supporting surface (4) at a slant in relation to the vertical.

7. Device according to one of the preceding claims, **characterized in that** pallet receiver (23) and pallet support (20) are provided with interacting initiating means (11, 16) which initiate the lowering of the supporting surface (4) in relation to the pallet support (20).

8. Device according to Claim 7, **characterized in that** the initiating means on the part of the pallet support (20) is a stop (16) mounted firmly thereon.

9. Device according to one of the preceding claims, **characterized in that** the supporting surface (4) of the second leg (2) is provided with at least one recess (25) extending from the free edge of the second leg (2) in the direction of the first leg (1).

10. Device according to Claim 9, **characterized in that** the recess has a width (A) which is smaller than the width of the pallets (3).

11. Device according to Claim 9, **characterized in that** the width (B) of the pallet support (20) is smaller than the width (A) of the recess in the second leg (2).

12. Device according to one of Claims 5 to 11, **characterized in that** the supporting surface (4) is formed by a pair of two supporting legs (9) which, at two pivots S (12) spaced from one another, are fastened rotatably to in each case two connecting pieces (10) extending essentially parallel to one another.

13. Device according to Claim 12, **characterized in that** the connecting pieces (10) are connected to the pallet receiver (23) freely rotatably about preferably centrally arranged pivots (14), so that rotation of the connecting pieces (10) about these pivots (14) brings about an essentially slanting lowering or raising movement of the supporting surface (4).

14. Device according to Claim 13, **characterized in that**, at the beginning of the unloading operation, the connecting pieces (10) form an angle (α) with the first leg (1) of the pallet receiver (23) which is limited by the supporting leg (9) bearing against the first leg (1) of the pallet receiver (23).

15. Device according to one of the preceding claims, **characterized in that** the pallet receiver (23) is pivotable about a spindle (18) which is arranged on a frame (24) and extends parallel to both the first leg (1) and the second leg (2).

16. Device according to Claim 15, **characterized in that** the spindle (18) is arranged close to the axis of gravity of the pallet receiver (23) completely filled with a pallet stack (3).

17. Device according to one of the preceding claims, **characterized in that** the pallet receiver (23) can be locked in loading position and in transfer position.

## Revendications

1. Dispositif d'empilage de palettes vides, telles que des euro-palettes, comportant un récepteur de palettes formé par un premier flanc et un deuxième flanc perpendiculaire à ce dernier et destiné à recevoir la pile de palettes, dans laquelle les palettes sont en appui avec l'un de leurs petits côtés contre le premier flanc, tandis que la palette inférieure de la pile est en appui sur une surface d'appui du deuxième flanc, et comportant un dispositif de pivotement destiné à faire pivoter le récepteur de palettes entre une position de chargement, dans laquelle le deuxième flanc est faiblement incliné par rapport à la verticale, et une position de transfert, dans laquelle le deuxième flanc est sensiblement horizontal,
**caractérisé par**
- un support de palettes (20) séparé du récepteur de palettes (23) pivotant,
- un dispositif de transport (22) pour le déplacement horizontal du récepteur de palettes (23) et/ou le support de palettes (20) entre une position de séparation, dans laquelle le récepteur de palettes (23) et le support de palettes (20) sont agencés en étant séparés l'un de l'autre dans l'espace, et une position de transfert,
- des moyens, actifs dans la position de transfert et destinés à abaisser la surface d'appui (4) du deuxième flanc (2) par rapport au support de palettes (20).

2. Dispositif selon la revendication 1, **caractérisé en ce que** le support de palettes (20) est agencé fixe horizontalement, alors que le récepteur de palettes (23) est propre à être déplacé par le dispositif de transport (22) entre une position de transfert et une position de chargement.

3. Dispositif selon la revendication 2, **caractérisé en ce que** le dispositif de transport (22) est formé par des rails (21) et des roulettes (6) montées sur un châssis (24), dans lequel le récepteur de palettes (23) est monté pivotant.

4. Dispositif selon l'une quelconque des revendications précédentes, **caractérisé en ce que** le dispositif de transport (22) est déplacé manuellement et **en ce que** des poignées (7) sont prévues à cet effet.

5. Dispositif selon l'une quelconque des revendications précédentes, **caractérisé en ce que** le support de palettes (20) a une hauteur (H) fixe, alors que la hauteur de la surface d'appui (4) du deuxième flanc (2) du récepteur de palettes (23) peut être abaissée.

6. Dispositif selon la revendication 5, **caractérisé par** une direction de déplacement des moyens destinés à abaisser la surface d'appui (4) en oblique par rapport à la verticale.

7. Dispositif selon l'une quelconque des revendications précédentes, **caractérisé en ce que** le récepteur de palettes (23) et le support de palettes (20) sont munis de moyens de déclenchement (11, 16), qui agissent conjointement et qui déclenchent l'abaissement de la surface d'appui (4) par rapport au support de palettes (20).

8. Dispositif selon la revendication 7, **caractérisé en ce que** le moyen de déclenchement sur le côté du support de palettes (20) est une butée (16) montée de manière fixe sur celui-ci.

9. Dispositif selon l'une quelconque des revendications précédentes, **caractérisé en ce que** la surface d'appui (4) du deuxième flanc (2) comporte au moins un évidement (25) qui s'étend depuis le bord libre du deuxième flanc (2) vers le premier flanc (1).

10. Dispositif selon la revendication 9, **caractérisé en ce que** l'évidement a une largeur (A) qui est inférieure à la largeur des palettes (3).

11. Dispositif selon la revendication 9, **caractérisé en ce que** la largeur (B) du support de palettes (20) est inférieure à la largeur (A) de l'évidement dans le deuxième flanc (2).

12. Dispositif selon l'une quelconque des revendications 5 à 11, **caractérisé en ce que** la surface d'appui (4) est formée par une paire de deux bras de support (9), lesquels sont fixés de manière rotative dans deux axes de rotation (12), à distance l'un de l'autre, respectivement au niveau de deux pièces de liaison (10) sensiblement parallèles l'une à l'autre.

13. Dispositif selon la revendication 12, **caractérisé en ce que** les pièces de liaison (10) sont reliées au récepteur de palettes (23) de manière librement rotative autour d'axes (14), centrés de préférence, de telle sorte qu'une rotation des pièces de liaison (10) autour de ces axes de rotation (14) provoque un mouvement d'abaissement ou de levage sensiblement incliné de la surface d'appui (4).

14. Dispositif selon la revendication 13, **caractérisé en ce que** les pièces de liaison (10) au début du processus de déchargement forment un angle (α) avec le premier flanc (1) du récepteur de palettes (23), lequel est limité par le contact du bras de support (9) contre le premier flanc (1) du récepteur de palettes (23).

15. Dispositif selon l'une quelconque des revendications précédentes, **caractérisé en ce que** le récepteur de palettes (23) est apte à pivoter autour d'un axe (18), qui est agencé sur un bâti (24) et qui est parallèle au premier flanc (1), de même qu'au deuxième flanc (2).

16. Dispositif selon la revendication 15, **caractérisé en ce que** l'axe (18) est agencé à proximité de l'axe du centre de gravité du récepteur de palettes (23), totalement rempli par une pile de palettes (3).

17. Dispositif selon l'une quelconque des revendications précédentes, **caractérisé en ce que** le récepteur de palettes (23) peut être bloqué dans la position de chargement et dans la position de transfert.
